Europäisches Patentamt

(19) European Patent Office

Office européen des brevets

(11) Numéro de publication: **0 132 477**
**B1**

(12) **FASCICULE DE BREVET EUROPEEN**

(45) Date de publication du fascicule du brevet:
27.08.86

(51) Int. Cl.⁴: **E 04 B 1/90,** F 16 L 59/02,
F 16 L 59/06

(21) Numéro de dépôt: 83401571.1

(22) Date de dépôt: 29.07.83

(54) Enceinte tubulaire à vide pour panneaux d'isolation thermique et acoustique.

(43) Date de publication de la demande:
13.02.85 Bulletin 85/7

(45) Mention de la délivrance du brevet:
27.08.86 Bulletin 86/35

(84) Etats contractants désignés:
CH DE GB IT LI SE

(56) Documents cités:
DE - A - 2 629 171
FR - A - 1 255 980
FR - A - 1 284 186

(73) Titulaire: Delluc, René, 51, rue Pastorelli, F-06000 Nice
(FR)

(72) Inventeur: Delluc, René, 51, rue Pastorelli, F-06000 Nice
(FR)

(74) Mandataire: Loyer, Yves et al, CABINET PIERRE
LOYER 18, rue de Mogador, F-75009 Paris (FR)

ACTORUM AG

# Description

La présente invention se rapporte à des enceintes tubulaires à vide, en matière plastique, destinées à la confection de panneaux d'isolation thermique et acoustique, et aux panneaux obtenus par incorporation desdites enceintes.

Ces enceintes, réunissant à la fois de très grandes qualités d'étanchéité aux gaz, de légèreté, de peu de fragilité et de facilité de fabrication par emploi de méthodes déjà éprouvées et appliquées, permettent la confection de panneaux à haut pouvoir d'isolation sous un faible poids, une faible épaisseur et sans fragilité.

On sait que certaines installations où doit être maintenu le froid telles que les tunnels de congélation, ou les armoires où sont conservées les denrées congelées, sont de grosses consommatrices d'énergie en dépit de l'isolation thermique de leurs parois réalisées généralement avec des nappes de laine de verre ou des panneaux de matière alvéolaire qui ne parviennent pas à empêcher une importante transmission de chaleur.

De même, le problème de la protection contre un rayonnement solaire intense comme celui frappant les parois métalliques des toits de voitures, de caravanes de camping ou de camions utilisés dans les pays chauds n'a pas reçu de solution satisfaisante. Des problèmes analogues se présentent pour l'isolation phonique ou acoustique de certaines cabines de locaux destinés à l'audition de musique ou nécessitant une simple protection contre les bruits extérieurs.

La solution idéale à ces problèmes serait de pouvoir utiliser une double enveloppe hermétiquement close, à l'intérieur de laquelle aurait été obtenu un vide poussé, c'est-à-dire dont la pression résiduelle des gaz contenus soit inférieure à $10^{-3}$ Torr, soit encore 0,1 pascal, le coefficient de transmission thermique au travers d'une telle enveloppe étant voisin de zéro et la transmission acoustique pratiquement nulle.

Cependant, cette solution bien connue et utilisée pour le transport de gaz liquéfiés ou plus simplement de liquides chauds ou froids dans les récipients dits «Thermos» présente l'inconvénient d'une structure soit lourde et coûteuse quand elle est en métal, soit fragile si elle est en verre, et risque en outre de perdre toutes ses qualités par détérioration d'un seul point de sa surface.

La solution de réaliser une telle enveloppe par incorporation d'éléments creux tubulaires à l'intérieur desquels on a ménagé un vide poussé entre des panneaux de matière alvéolaire a déjà été proposée – brevet français John MANVILLE N° 1 284 186 – YUEN N° I 255980 et brevet allemand RODRIAN N° 2.629.171, mais dans ces trois solutions les tubes ou enceintes sous vide sont soit métalliques soit en verre et dans le cas de tubes plastiques il n'est pas indiqué de moyens pour obtenir une obturation facile ni garantir une étanchéité dans le temps de ces tubes.

La présente invention se propose de remédier à ces inconvénients en fournissant des éléments creux, peu coûteux, peu fragiles, faciles à fabriquer par les méthodes ordinaires et assurant le maintien dans le temps (pression inférieure à 0,1 pascal) d'un vide poussé à l'intérieur de leur enceinte.

Une caractéristique de l'invention est que ces éléments formant enceintes à vide sont constitués de tubes rigides de forme et section appropriées revêtus d'une enveloppe constituée par une feuille ou un film faits d'une matière plastique telle que le polyvinylidène (PVD) ou l'alcool polyvinylique, qui sous cette forme de feuilles ou de films ont des qualités bien connues d'étanchéité pratiquement totale et durable aux gaz et qui en outre peuvent aisément s'obturer par les méthodes courantes de soudage.

Le tube rigide interne pourra être constitué par un tube métallique mais sera de préférence réalisé sous la forme d'un tube en matière plastique rigide telle que chlorure de polyvinyle, polyamides, polyacétals, polypropylène ou polycarbonates, sans que cette liste soit limitative.

On réalise ainsi un tube composite dans lequel la partie interne assure la fonction de rigidité, la fonction d'étanchéité étant dévolue à l'enveloppe externe.

Une autre caractéristique de l'invention est de faciliter la fabrication industrielle de tels éléments tubulaire en utilisant des tubes rigides à section oblongue et de préférence elliptique dont les extrémités sont renforcées par la présence de bouchons appropriés pourvus de perforations et en donnant aux enveloppes souples une longueur supérieure à celle des tubes rigides de manière à faciliter le soudage de cette enveloppe par son aplatissement et la mise en contact de ses parois aux deux extrémités.

D'autres caractéristiques et avantages apparaîtront à la lecture de la description suivante faite en référence aux dessins annexés qui représentent à titre d'exemple non limitatif un mode de réalisation de la présente invention.

Sur les dessins:

La figure 1 est une vue en plan d'une portion d'élément tubulaire.

La figure 2, la coupe longitudinale faite le long de la ligne II-II de la figure 3.

La figure 3, la vue en coupe transversale faite le long de la ligne III-III de la figure 1.

La figure 4 représente une portion de l'élément tubulaire montrant l'aplatissement de la gaine à une extrémité pour faciliter son soudage.

La figure 5, le bouchon perforé vu de l'intérieur de l'élément tubulaire.

Les figures 6 et 7 montrent respectivement les vues en coupe du bouchon le long des lignes VI-VI et VII-VII de la figure 5.

La figure 8 est une vue en coupe transversale d'un panneau isolant obtenu par incorporation des tubes à vide montrant une disposition préférentielle de ces éléments à vide entre des plaques alvéolaires.

La figure 9, la vue en profil longitudinal de deux éléments voisins dans un tel panneau après retrait d'une partie du matériau alvéolaire.

Dans le mode de réalisation représenté, les corps creux de forme oblongue ou ellipsoïdale sont des éléments tubulaires.

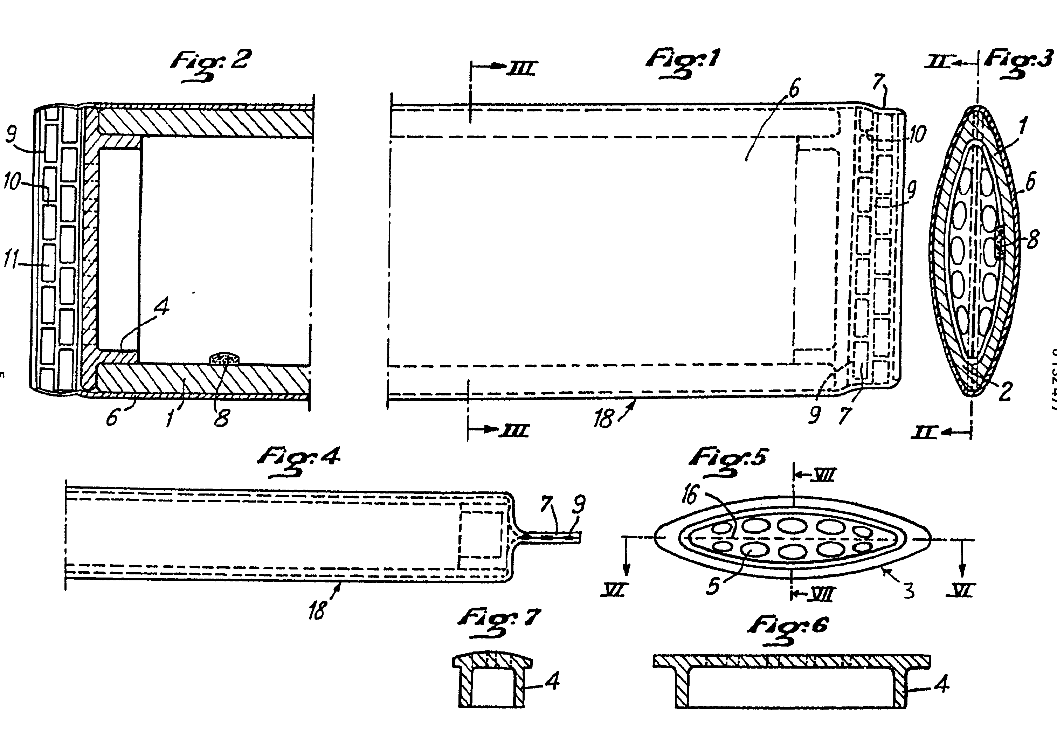

Chaque élément tubulaire est composé, ainsi qu'il apparaît sur les figures 1 à 4, d'un tube 1 en matière plastique rigide, par exemple en chlorure de polyvinyle (PVC), polyvinylidène (PVD), polyamides, polyacétals, polypropylènes, polycarbonates, ou toute autre matière plastique facile à dégazer et relativement étanche elle-même aux gaz. Ces éléments obtenus par les méthodes ordinaires d'extrusion sont découpés à la longueur désirée et peuvent être de forme rectiligne, ou coudés, ou formés selon la destination de l'élément à vide. Leur section transversale est oblongue et de préférence ellipsoïdale ainsi qu'il apparaît sur les figures 3 et 8, l'épaisseur des parois peut ne pas être uniforme et par exemple être plus importante aux extrémités 2 du grand axe de l'ellipse de façon à accroître la résistance à l'écrasement.

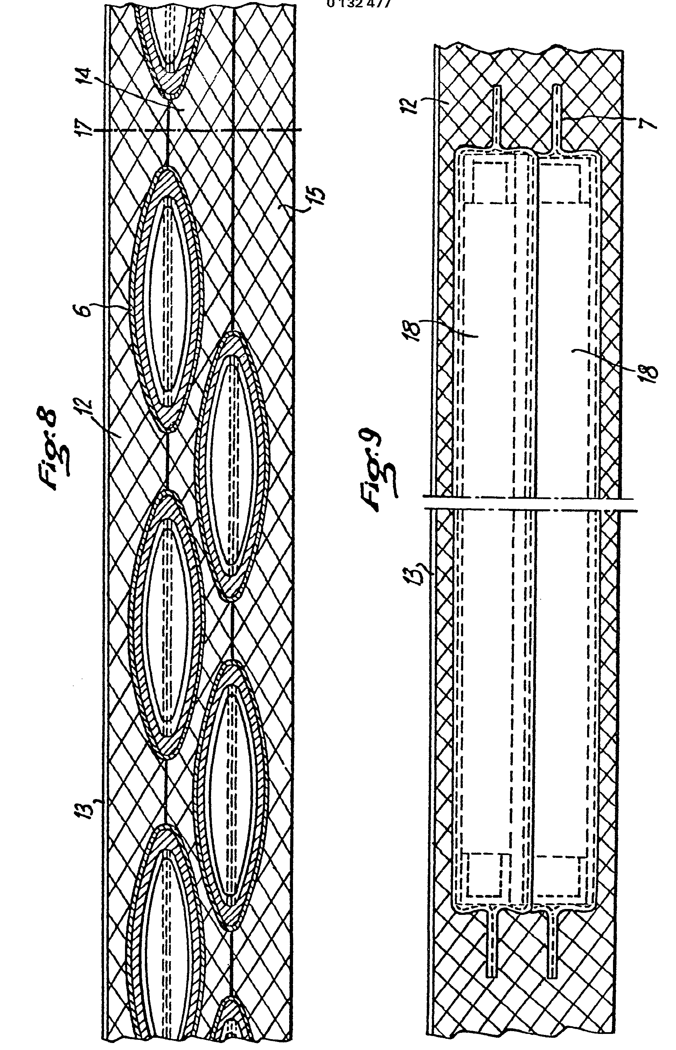

Les deux extrémités de ce tube sont fermées par un bouchon perforé 3 (figures 5 à 7) comportant une collerette périphérique 4 s'enfonçant avec serrage dans le tube. Les perforations sont disposées de part et d'autre d'une ligne médiane 16 recouvrant sensiblement le grand axe de l'ellipse formée par la section transversale.

Le tube rigide 1 est placé à l'intérieur d'une enveloppe ou gaine 6 constituée d'une feuille en matière plastique souple de polyvinylidène ou a base d'alcool polyvinylique, cette gaine étant fabriquée par les méthodes ordinaires d'extrusion ou extrusion-gonflage sous forme de manchon dont la longueur est supérieure à celle des tubes rigides qu'elle doit envelopper. De tels produits sont connus, sous cette forme de feuilles ou films, pour avoir de très grandes qualités d'imperméabilité aux gaz et de facilité d'autosoudage.

La forme elliptique des sections de l'élément rigide 1 facilite le rabattement des bords de la gaine de sorte qu'après avoir réalisé le vide poussé à l'intérieur de l'enceinte il est facile de pratiquer l'obturation par soudage de ces extrémités aplaties selon les méthodes habituelles.

La longueur de cette gaine est supérieure à celle du tube rigide de manière à présenter un prolongement à chaque extrémité dont les bords sont rabattus sur le plan médian ou de symétrie (figure 4).

L'une de ces extrémités 7 de la gaine peut d'ailleurs être soudée avant mise sous vide de l'enceinte.

La mise sous vide de ces enceintes s'opérant selon des procédés courants et ne faisant pas partie en soi de l'invention n'est pas décrite. Cependant, le vide à réaliser doit parvenir à ne laisser subsister à l'intérieur des tubes qu'une pression résiduelle qui ne dépasse pas $10^{-3}$ Torr, soit 0,1 pascal, ce qui s'obtient par les machines et procédés habituels, afin de garantir le maintien de ce vide, les tubes rigides en matière plastique sont dégazés au préalable et il est logé à l'intérieur de chacun de ces tubes une pastille 8 de charbons actifs ou tout autre produit ayant la propriété d'absorber les gaz que pourraient encore dégager les parois des tubes rigides.

La soudure des extrémités des manchons est réalisée, après insertion des bouchons perforés 3 sur les deux extrémités 7 de cette enveloppe souple 6, par des techniques classiques et par exemple par l'application de courants de haute fréquence. Afin d'obtenir une étanchéité complète et permanente, la structure de cette soudure comporte deux ou trois cordons latéraux 9 réunis par des cordons de soudure transversaux 10 (figure 2), formant corps entre elles pour constituer un ensemble de régions fermées ou alvéoles 11. Il est facile de voir qu'un éventuel défaut de la soudure ne peut permettre à l'air dans ce dispositif de se propager jusqu'à l'enceinte sous vide en raison du quadrillage des cordons de soudure.

Afin d'éviter toute contrainte, sous l'effet de la pression de l'air, le cordon de soudure latéral intérieur 9 s'appuie le long de la ligne médiane 16 du bouchon 3 qui sur cette partie est dépourvu de perforations.

Après les opérations de mise sous vide et de soudage, de tels éléments tubulaires 18 peuvent être placés entre deux couches de matière alvéolaire 12, 14, 15 dans l'exemple de la figure 8 pour constituer un panneau d'isolation thermique et acoustique.

Les plaques alvéolaires, constituées de mousses rigides de matière plastique telle que le polystyrène expansé, le polyuréthanne, ou les résines phénoliques, sont de préférence préalablement moulées de façon à présenter des évidements destinés à recevoir les éléments à vide 18. On peut encore accroître l'efficacité de tels ensembles en utilisant deux ou plusieurs couches de tubes à vide et en les décalant de telle sorte que les éléments 18 d'une couche recouvrent l'espace intercalaire situé entre les éléments 18 d'une autre couche ainsi qu'il est visible sur la figure 8.

L'ensemble des plaques alvéolaires est de préférence collé aux éléments tubulaires 18. Selon les utilisations, l'une des faces extérieures du panneau peut être recouverte d'une feuille 13 métallique ou de plastique souple recouvert d'une pellicule de métal afin de réfléchir les rayonnements.

Afin de faciliter le découpage du panneau sans détruire les éléments à vide, des zones 17 (figure 8) ne comportant pas de tubes 18 peuvent être prévues.

Les panneaux ainsi constitués peuvent être réalisés sous des formes quelconques, planes, prismatiques, cylindriques, etc., pour s'adapter aux parois des enceintes diverses auxquelles ils doivent s'appliquer en vue d'assurer leur isolation.

**Revendications**

1. Enceinte à vide, destinée à la confection de panneaux d'isolation thermique ou acoustique, qui est constituée par au moins un élément tubulaire creux, rigide (1), de préférence en matière plastique, caractérisée en ce que chaque tube est placé à l'intérieur d'une gaine (6) formée par une feuille souple en matière plastique possédant de grandes propriétés d'étanchéité aux gaz telle que les feuilles de polyvinylidène ou à base d'alcool polyvinylique.

2. Enceinte à vide en matière plastique selon la revendication 1, caractérisée en ce que les éléments tubulaires rigides (1) comportent à chacune de leurs extrémités des bouchons (3) pourvus d'orifices (5).

3. Enceinte à vide selon l'une quelconque des revendications 1 et 2, caractérisée en ce que la gaine d'étanchéité à l'air et aux vapeurs recouvre les bouchons et se prolonge au-delà des extrémités de l'élément tubulaire rigide (1), les bords de cette gaine à chaque prolongement étant réunis selon le plan médian (16), la fermeture de la gaine étant obtenue après la mise sous vide de l'élément tubulaire (1) au moyen d'au moins deux séries de cordons de soudure (9) les uns parallèles, les autres perpendiculaires à la direction longitudinale du tube, entraînant ainsi la formation d'un ensemble d'alvéoles fermées (III).

4. Enceinte à vide selon l'une quelconque des revendications précédentes, caractérisée en ce que les éléments tubulaires sont de section oblongue ou ellipsoïdale.

5. Panneau d'isolation thermique et acoustique obtenu par l'incorporation des enceintes à vide telles que revendiquées en 1 à 3 dans un matériau d'isolation alvéolaire formé d'au moins deux plaques (12) de matériau alvéolaire dont l'une au moins comporte des logements appropriés à la forme des éléments creux (18).

## Patentansprüche

1. Hohlraumschale zur Herstellung von Wärme- bzw. Schalldämmplatten aus zumindest einem festen, rohrförmigen, vorzugsweise aus Kunststoff bestehenden Hohlteil (1), dadurch gekennzeichnet, dass sich jedes Rohr in einer Hülle (6) in Form einer hochgasdichten, elastischen Kunststoffolie wie Polyvinyliden bzw. polyvinylalkoholhaltige Folien befindet.

2. Kunststoffhohlraumschale gemäss Anspruch 1, dadurch gekennzeichnet, dass die festen rohrförmigen Teile (1) an den Enden jeweils mit einem Öffnungen (5) aufweisenden Verschluss (3) versehen sind.

3. Hohlraumschale gemäss irgendeinem der Ansprüche 1 und 2, dadurch gekennzeichnet, dass die luft- und dampfdichte Hülle die Verschlussstücke abdeckt und dazu über die Enden des festen rohrförmigen Teils (1) hinausragt, wobei die hinausragenden Hüllenränder jeweils entlang der Mittelachse (16) zusammengefügt werden und der Verschluss der Hülle nach Vakuumbildung im Rohr (1) mittels mindestens zwei Reihen von Schweissnähten (9) parallel und senkrecht zur Längsachse des Rohrs erfolgt, wodurch mehrere geschlossene Zellen gebildet werden (III).

4. Hohlraumschale nach irgendeinem der vorstehenden Ansprüche, dadurch gekennzeichnet, dass diese rohrförmigen Teile einen länglichen bzw. ellipsoidalen Querschnitt besitzen.

5. Wärme- und Schalldämmplatte, die durch Einbau von Hohlraumschalen gemäss Anspruch 1-3 in ein Schaumstoff-Isoliermaterial, das aus zumindest zwei Schaumstoffplatten (12) besteht, von denen zumindest eine entsprechend der Form der Hohlteile (18) gestaltete Aussparungen aufweisen muss, gebildet wird.

## Claims

1. A vacuum enclosure, intended for making thermal or acoustic insulation panels, formed of at least one rigid hollow tubular element (1) preferably made of plastic material, characterized in that each tube (1) is placed within a sheath (6) formed of a flexible plastic sheet highly impervious to gases, such as polyvinylidene sheets or sheets based on polyvinylic alcohol.

2. A plastic vacuum enclosure according to claim 1, characterized in that the rigid tubular elements (1) comprise on each of their ends plugs (3) provided with orifices (5).

3. A vacuum enclosure according to either of claims 1 and 2, characterized in that the air and vapourtight sheath (6) covers the plugs and extends beyond the ends of the rigid tubular element (1), the edges of this sheath along each of its extensions being joined together along the median plane (16), the closing of the sheath being obtained after the tubular member (1) has been evacuated, by means of at least two series of welded seams (9), some of which are parallel and the others perpendicular to the longitudinal direction of the tube, so as to result in the formation of a set of closed alveoli (III).

4. A vacuum enclosure according to any of the above claims, characterized in that the tubular elements have an oblong or elliptical cross-section.

5. A thermal and acoustic insulation panel obtained by incorporating vacuum enclosures as claimed in claims 1 through 3 into an alveolar insulating material formed of at least two plates (12) of alveolar material, at least one of said plates being provided with recesses matching the shape of the hollow tubular elements (18).

Fig.1

Fig.2

Fig.3

Fig.4

Fig.5

Fig.6

Fig.7

*Fig. 8*

*Fig. 9*

0 132 477